# EUROPEAN PATENT APPLICATION

(11) **EP 1 729 252 A2**
(43) Date of publication of application: **06.12.2006**
(21) Application number: 06113652.9
(22) Date of filing: 09.05.2006
(51) Int. Cl.: G06Q 10/00

(54) **System and method for dynamically modeling of workflows for interacting stateful resources**

(30) Priority: 03.06.2005 EP 05104843
(71) Applicant: International Business Machines Corporation, Armonk, N.Y. 10504 (US)
(72) Inventor: Breh, Jochen, 70499 Stuttgart (DE); Behrendt, Michael, 97236 Randersacker (DE); Breiter, Gerd, 72218 Wildberg (DE); Ochs, Georg, 71159 Moetzingen (DE); Schmidt, Andrea, 71034 Böblingen (DE)
(74) Representative: Klein, Hans-Jörg

(57) **Abstract**

The present invention provides a new way of modeling workflows for interacting stateful resources. The inventive modeling process starts with modeling an Activity Sequence Description (ASD) by using keywords. The keywords specify well-defined resource-interaction semantics. Each modification of the ASD automatically triggers a new checking process of the ASD in its current state which is executed by the ASD Processor.

The ASD Processor parses the keyword, evaluates the resource-interaction semantic associated to the keyword, and creates for each modeled activity an updated resource type model and an updated resource instance model based on the information provided by the current resource type model, the current resource instance model, the semantics associated the currently processed keyword and the semantics of the relationship stereotype definition. The current resource type model and said current resource instance model are predefined models provided by the user or resulting from the current ASD modeling process.

A successful updating of the resource type model and said resource instance model for the newly modeled activity automatically indicates the consistency of the modeled activity to preceding modeled sequence of activities of the modeled ASD. In the case of inconsistency, it automatically provides support to the user for resolving said inconsistency.

The present invention allows modeling of the workflow with the underlying resources at the same time by using the keywords and ensures consistency between the workflows and the underlying resource model already during the modeling process.

## Description

### Field of the present invention

The present invention generally relates to the field of workflow modeling, especially to a method and system for dynamically modeling of workflows for interacting stateful resources.

### Background of the present invention

As of today, workflow developers are forced to start the development process of a workflow with thinking about the resources its workflow will be operating on. Not until he has finished this process, he is able to start with the actual workflow modeling.

This style of development is contrary to how the typical workflow developer normally thinks: A workflow developer thinks in terms of processes, not in terms of resources (whereas in contrast the typical object-oriented developer thinks in terms of resources (or classes)). Up to today this gap between the two development models didn't pose a problem due to the following reason: Workflow developers never had to care about the model their workflow would be processed on, since this model was normally already given. This shall be illustrated with an example: Typical workflows such as travel booking workflows involve different resources like air lines (for booking the flight tickets), credit card companies (for verifying credit card numbers) and car rental companies (for booking the rent of car). So the model a travel booking process is based on is formed by the Web services exposed by the resources named before (the air line, the credit card company, and the car rental company). The workflow developer never has to care about the model per se, since this model is fixed anyway. For the workflow developer there is no way of changing this model - he just has to understand and accept it. The situation changes as soon as the responsibility of the workflow developer is extended in a way that he is not longer only responsible for the workflow, but also for the development of the underlying resource model. Furthermore, there are scenarios in which the workflow developed by the workflow developer has the only purpose of bringing the model to life. This perspective of workflow modeling is novel. Mapped to the travel booking example mentioned before this means that the workflow developer must develop the Web services of the air line, the credit card company and the car rental company at the same time as he develops the workflow creating those resources and invoking operations on them (admittedly, this example is not very realistic, but it illustrates the problem this invention is trying to solve very vividly). In order to keep the workflow and the resource implementation code in sync, it could be very helpful to have some tooling support implementing architectural concepts solving especially the problem discussed above. Those architectural concepts form the main part of this invention.

### State of the art

This section will briefly explain the state of the art of how workflows and models of the underlying stateful resources are generally developed.

Today's workflow development is coined by the need for quickly modeling, implementing, testing and debugging of workflows and the underlying resources those workflows are operating on. In order to provide homogeneous access to all resources involved in the workflow, those resources can be exposed as Web services (since the current software development mainstream is moving towards a service-oriented world). Due to their stateful characteristics, those resources can even be exposed as stateful Web services.
The main purpose of workflows from the perspective of this invention is the usage of workflows for the creation of stateful resources and the invocation of operations of those resources. So the prerequisite for developing a workflow is the development of the underlying resource-relationship model. For the definition of a resource-relationship model it is required to figure out which resources are involved in particular and which operations are provided by them. After that step is finished, the workflow can be developed, which basically means implementing activities for the creation of resources, relating them in the appropriate way and invoking operations on them in the correct order.

It is important to mention that the development process described above is normally done in an iterative manner in order to test, debug and refine both the resource-relationship model and the workflow. One big challenge is to keep the workflow in synchronization with the underlying resource-relationship model (the resources, their relationships and the operations of the resources).
The problem that is encountered today as new workflows and corresponding resource-relationship models are modeled, developed, tested and debugged lies in the static nature of this development process.

Furthermore, there is a lack of consistency checking within the workflow and between the workflow and the underlying resource model of the state-of-the-art workflow modeling, development, testing and debugging: The current model of this process is very rigid as it prescribes that the resource-relationship model must exist before the actual workflow development can be started. Besides that, current modeling techniques (such as the Unified Modeling Language - UML) lack of features for consistency checking between sequence of operations calls (which are actually workflows) and the resource-relationship models they are operating on. Furthermore there is no way of introspecting the dependency graph of all stateful resources created by the workflow during runtime, since the UML is only for modeling (which normally takes place during development time) and not necessarily for the visualization of runtime artifacts.

The problems of the state-of-the-art approach are as follows:
The static modeling, development, testing and debugging process of workflows based on stateful resources and their interactions is very rigid and cumbersome.

Currently the modeling process of workflows and the modeling process of resources are disconnected - it is very hard to keep both models in synchronization.

Another problem of the current approach is that there is no checking during development/compile time whether the sequence of steps of the workflow can actually be executed without an error.

### Object of the present invention

It is an object of the present invention to provide a method and system for modeling of workflows for interacting stateful resources avoiding the disadvantages of the prior art as described above.

### Summary of the present invention

The present invention provides a new way of modeling workflows for interacting stateful resources. The inventive modeling process starts with modeling an Activity Sequence Description (ASD) by using keywords. The keywords specify well-defined resource-interaction semantics. Each modification of the ASD automatically triggers a new checking process of the ASD in its current state which is done by the ASD Processor.

The ASD Processor parses the keyword, evaluates the resource-interaction semantic associated to the keyword, and creates for each modeled activity an updated resource type model and an updated resource instance model based on the information provided by the current resource type model, the current resource instance model, the semantics associated the currently processed keyword and the semantics of the relationship stereotype definition. The current resource type model and said current resource instance model are predefined models provided by the user or resulting from the current modeled ASD. In general, a resource type model is a graph, whereas the resource types are the nodes and the edges are the relationships existing between them. A resource instance model is also a graph, whereas in this case the resource instances are the nodes and the edges are the relationship instances between them.

A successful updating of the resource type model and said resource instance model for the newly modeled activity automatically indicates the consistency of the modeled activity to preceding modeled sequence of activities of an ASD. In the case of inconsistency, it automatically provides support to the user for resolving said inconsistency.

This new way of modeling workflows allows modeling of the workflow with the underlying resources at the same time by using the keywords and ensures consistency between the workflows and the underlying resource model already during the modeling process.

### Brief description of the drawings

In the following, preferred embodiments of the present invention will be described in greater detail by making reference to the drawings in which:
Fig. 1 shows the prior art modelling of workflow,
Fig. 2 A shows a keyword table which provides an exemplary set of keywords which specify well-defined resource-interaction semantics used by the Activity Sequence Description Language (ASD) for modelling a workflow,
Fig. 2 B shows the basic inventive concept of the present invention,
Fig. 2 C shows the basic control flow of the ASD Processor according to the present invention,
Fig. 2 D shows a more detailed control flow of the inventive ASD Processor according to the present invention,
Fig. 2 E shows the basic architectural model for an implementation of the present invention, and
Fig. 3 A - G show an example of an ASD and how that ASD Processor is processed by the ASD processor according to the present invention.

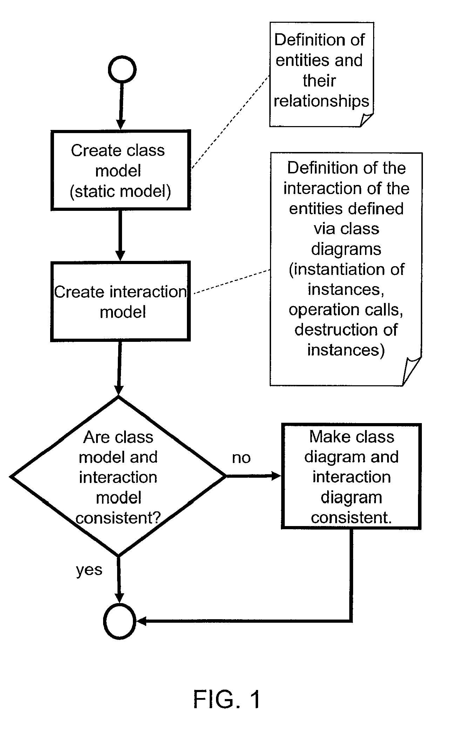

Fig. 1 shows the prior art software modeling process.

Today's software development processes envision a certain number of steps, which must be performed in sequence for designing and implementing a piece of software. The first step is normally the definition of all entities making up the software, which is being developed. This includes the entities themselves, their attributes, how and in which multiplicity they are related to each other and their operations. A common way for creating such a model is a class diagram, as it is defined by the Unified Modeling Language (UML).

Based on this static diagram (it only shows entities, not their interaction behavior) the developer normally creates a bunch of interaction diagrams modeling the interaction of those entities. The most common type of interaction diagram defined in the UML is the sequence diagram. Sequence diagrams capture the interaction between the instances of the entities modeled before. Sequence diagrams allow modeling when an instance of a certain class is created and which class instance calls which operations of which class instance. It is important to mention that sequence diagrams are normally created based on class diagrams constituting the static model of entities which must be in place before the interaction between instances of those entities can be defined. The same applies to activity diagrams, which are the second type of interaction diagrams of the UML. Activity diagrams are basically also sequence diagrams - they are just rendered differently.

Based on the class diagrams and interaction diagrams it is possible to generate code implementing the modeled behavior. Once the code generation is finished, the developer can run the code for testing and debugging it. Especially with respect to the implementation of stateful entities as stateful Web services, this debugging process becomes very cumbersome since today there is no way of getting a consolidated view of the current state of all service instances during runtime. If a bug is found in the process of testing, the developer must go back to the respective model, find and fix the bug, regenerate the code and test if the system now behaves as desired.

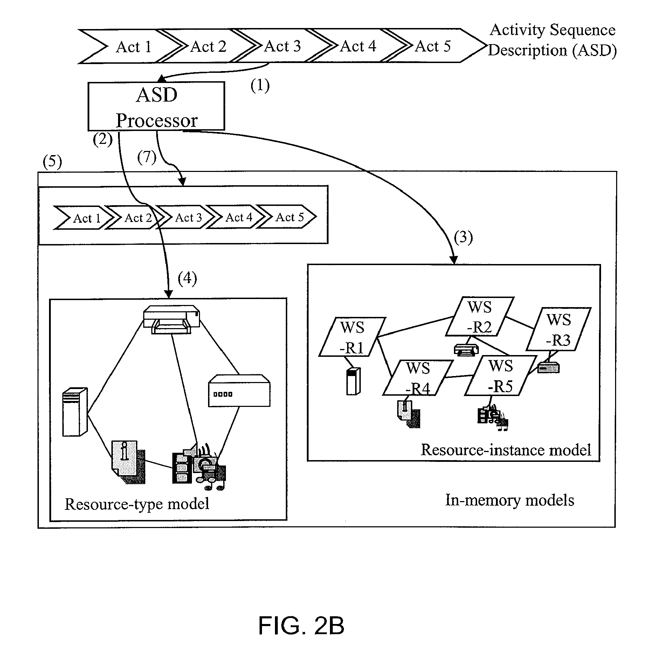

Fig. 2 B shows the basic concept for dynamically modeling of workflows of interacting stateful resources according to the present invention.

The workflow is described by an Activity Sequence Description (ASD1 - Actl-Act5) which consists of a sequence of activities. Each activity describes an interaction with at least one stateful resource.

The inventive modeling process starts with modeling activities by using keywords. The keywords specify well-defined parameters with their associated resource-interaction semantics.

Each newly modeled activity (e.g. creation of a resource instance, deletion of resource instance, associate a relationship between two resource instances, de-associate relationship between resource instances etc.) which is defined by a keyword automatically triggers a new checking process which is done by the ASD Processor 2. The ASD Processor 2 parses the keyword, evaluates the resource-interaction semantic associated to the keyword, and creates for each modeled activity an updated model 7 of the flow of operations, an updated resource type model 4, and an updated resource instance model 3 formed by those operations based on the information provided by the current model of the flow of operations, the current resource type model, the current resource instance model, the semantics associated to the currently processed keyword and the semantics of the relationship stereotype definition. The current resource type model and said current resource instance model are predefined models provided by the user or resulting from the current ASD modeling process.
A successful updating of the resource type model 4 and the resource instance model 3 for the newly modeled activity automatically indicates the consistency of the modeled activity to preceding modeled sequence of activities of an ASD 1. In the case of inconsistency, it automatically provides support to the user for resolving said inconsistency.

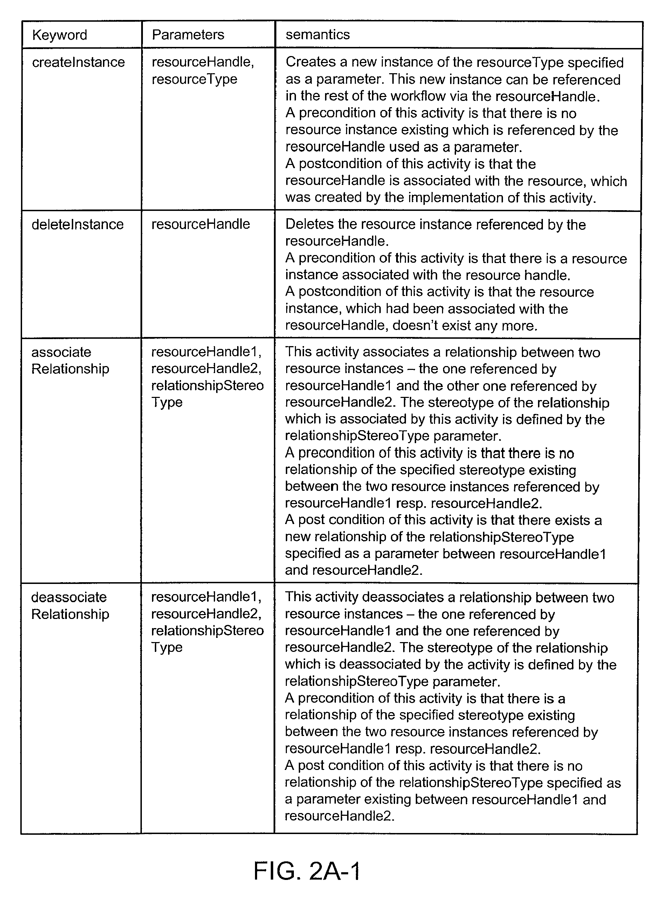

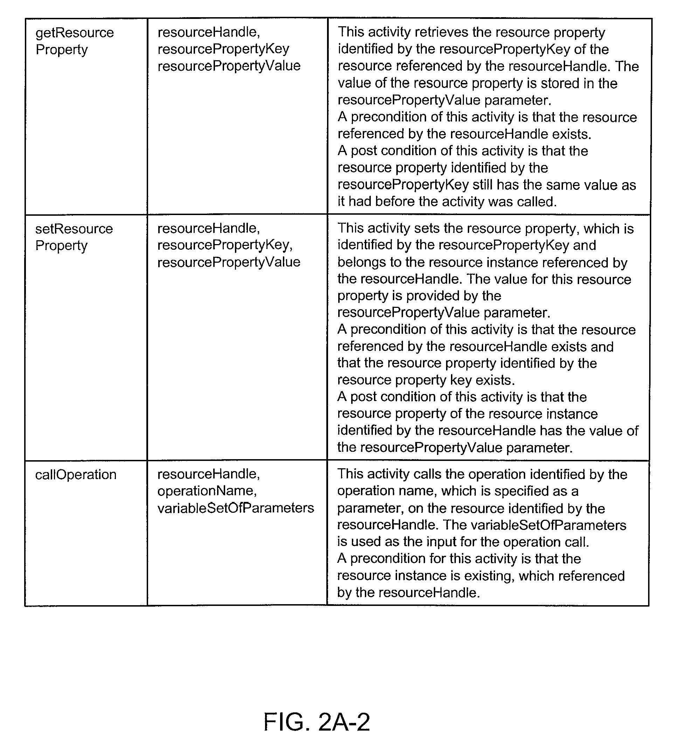

ASDs 1 bring together two basic concepts - sequences of activities and the underlying resource type models the activities are working on.
Today's development tools provide no/poor support in keeping those two worlds consistent respectively developing them concurrently (especially on a distributed stateful Web service layer). In contrast, an ASD modeling tool based on the ASD Processor 2 provides much richer support by exploiting the semantics provided by the keywords defined in the table in Fig. 2 A.

Today's modeling languages and tools provide only modeling support for static resource type models, i.e. the developer defines the required resource types and the relationships between those entities. But this approach does not allow modeling relationships, which are created during runtime - neither in class diagrams nor in interaction diagrams. For ASD developers it is for example desirable that the resource type model is kept consistent with the associateRelationship /deassociateRelationship activities used in ASDs 1. The ASD Processor 2 provides this functionality. By parsing the ASD 1 the ASD Processor 2 figures out which resource type instances is associated with which other resource type instances and reflects that on the resource type model. So the ASD Processor 2 inserts those relationships into the static model, whereas these relationships are annotated in a special way for flagging them as special, relationships, which will only come to live during the processing of an ASD 1 (versus relationships, which are inherently defined by the static model). This allows the ASD developer to check if the resource type model, which would be generated by an ASD 1, matches the resource type model or the resource instance model which was expected.

More general, the ASD Processor 2 can process relationships and perform consistency checks depending on relationship stereotypes. A certain relationship stereotype may be defined in a manner that it only allows a cardinality of one on each of its endpoints, so if the ASD developer tries to associate more than one relationship of this stereotype starting from a certain resource instance, the ASD Processor 2 would not allow this. Another example is the "hosts" relationship stereotype, which implies a lifetime dependency between the endpoints of this relationship. So if the resource instance being on the hoster endpoint of a hosts relationship is destroyed, it is implied that the hostee resource instance is also destroyed. This is new functionality is accomplished by the rich semantics of the ASD 1.

An additional feature of the ASD Processor 2 is that it is able to recognize if an activity reads or writes a resource property. This feature is based on the semantics provided by the getResourceProperty and setResourceProperty operation providing the read / write semantics. So it is possible already during modeling time to determine which resource properties of a certain resource type are actually needed (those, which are never read or written are normally not needed). Besides that, the information about read/written values of properties can be exploited for implementing transactional behavior for ASDs 1.

Additionally, the ASD Processor 2 can perform lifetime dependency checks. That means it can ensure that a resource instance is created before the value of one of its resource properties is queried, for instance. That means in the end, that the ASDP is capable of enforcing the preconditions and post conditions of the activity keywords listed in table of Fig. 2 A.

A key feature of the present inventive modeling process is the usage of keywords (Fig. 2 A) with well-defined resource-interaction semantics used as a part of the ASD 1 and their exploitation already during the modeling process.

The following section gives an introduction to the usage of keywords with a well-defined resource-interaction semantic in the ASD 1.

The present invention deals with resources and workflows. A resource is some entity having state. Examples for resources are servers, printers and also "virtual" resources like clusters. Most resources have capabilities, which inherently belong to them - a server can shutdown itself, a printer can print and a cluster and add more servers to it. It is important to distinguish between resource instances and resource types. When it is normally talked about resources resource instances are meant. "Server" is a resource type, and a couple of server machines standing in a data center are (resource) instances of that resource type "Server". Resource types also have relationships between each other (which then of course result in relationship instances between resource instances): A Server hosts an Operation System and a Cluster virtualizes Servers. The words (e.g. hosts, virtualizes) and the semantic expressed by them for describing those relationships are called relationship stereotypes. The hosts-relationship stereotype expresses for example, that if the hoster is destroyed, then the hostee will also be destroyed - so it expresses a lifetime dependency between the hoster and the hostee.
The implementation of the operations, which inherently belong to resources, can be seen as workflows. Those workflows may create instances of other resource types, destroy existing resource instances, create relationships of special relationship stereotypes between resource instances, etc. So there are various semantics for the definition of activities (the atomic elements of workflows). Those semantics will be described in the following section.

A key requirement for understanding the exploitation of workflows with special, so-called resource-interaction semantics is the understanding of the definition of the keywords highlighting those semantics. Table in Fig. 2 A provides an exemplary set of the keywords, their parameters and their semantics.

The ASD 1 forms the basis for all other components of the present invention, e.g. the ASD Processor 2. It is mainly based on the usage of special keywords semantically highlighting changes on the dependency graph formed by the underlying resource instances.

All relevant keywords are listed and briefly described in Fig. 2 A.

The ASD 1 provides two features helping to avoid errors:
The first one is based on keywords with well-defined semantics. Those keywords are used by an ASD Processor 2 to support the developer in creating a consistent ASD 1. This support is provided during development time.

The second feature is the possibility of building up a graph of stateful services while processing the activity sequence description in some sort of interpreter. This graph-building functionality can be seen as a debugger or a simulator for the workflow - but rather from a stateful service perspective than from a workflow perspective.

In summary the present invention presents an approach for extending the current workflow development process by using keywords as described in table to Fig. 2 B. Instead of starting with developing the resource model and defining the sequence of operations to be called based on the resource model, the present invention introduces a more generalized approach: The workflow and the underlying resources are defined at the same time by using the above described keywords, which avoids a lot of problems inherent to today's development process as described in the prior art section.

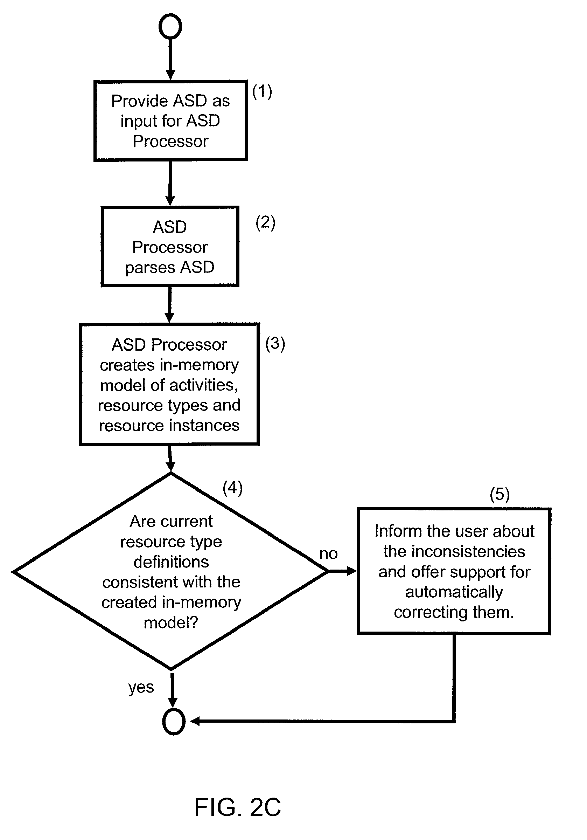

Fig. 2 C shows the basic control flow of the ASD Processor. This flow starts with an ASD as the input for the ASD Processor 1. After that the ASD Processor parses this ASD 2. Based on the information from the parsing process, the ASD Processor builds up an in-memory model of the flow of operations, which are described by the ASD. Besides that, the ASD Processor also creates an in-memory model of the resource instances the ASD Processor is dealing with (this is required for the consistency checks) and the resource types, which are required by the ASD 3. This resource type model is compared with the current resource type model that had been provided by the user before the ASD was created 4 (if there was not any model created before, the ASD-based resource type model should serve as a starting point for the initial resource type model). Then the ASD Processor informs the user about the results of the of the consistency checks, both on the resource instance and resource type level, and offers support for automatically fixing the inconsistencies 5.
This flow of operations is continuously performed during the development of the ASD, so that the developer gets immediate feedback about potential errors of the ASD, which he develops.

Generally spoken, the ASD Processor supports a development process allowing developing of ASDs in a much richer way than today's modeling tools allow this. The basis for the added value of ASD Processor is the rich semantics of the keywords using in their activities.

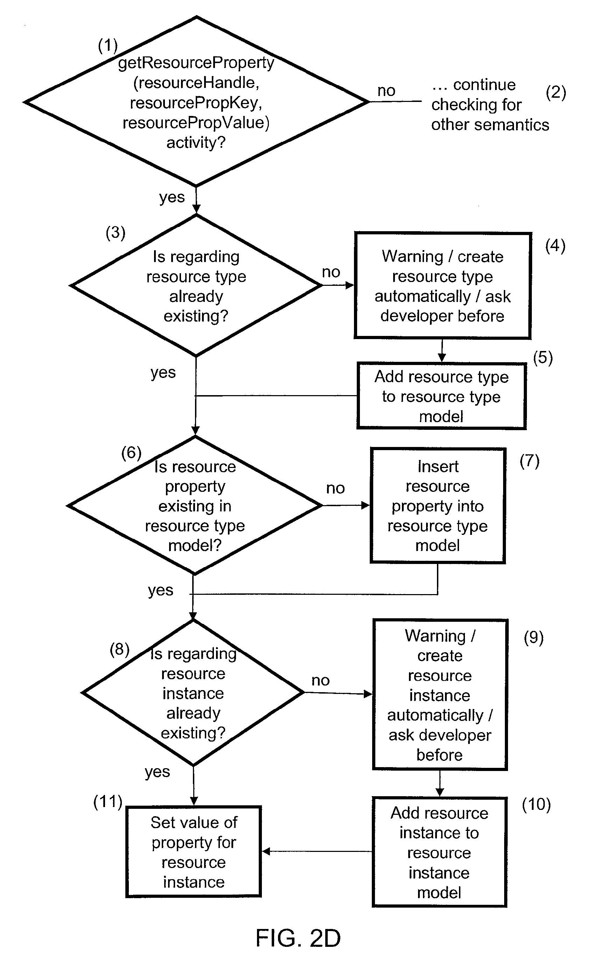

Fig. 2 D shows a more detailed control flow of one parse/check step within the ASD Processor. The example, which is taken here, is the getResourceProperty semantic. The flow diagram depicted in Fig. 2 D starts somewhere in middle of the parsing process of the ASD.

In (1) the ASD Processor checks, if the current activity is a getResourceProperty activity as defined in Fig. 2 A. If that is not the case, then the ASD Processor continues checking if the current activity is of a different semantic 2. If the ASD Processor figures out that the current activity is of the getResourceProperty semantic, then it checks, if the resource type of the resource instance, for which the resource property shall be set, is actually existing 3. If that test evaluates to false, then the resource type is automatically created (maybe by asking the ASD developer before) (4) and added to the resource type model. After that step or if the resource type already existed, the implementation continues to check if the resource property for the respective resource type already exists 6. If it does not yet exist, then it is added to the resource type model and the flow continues to check if the resource instance, for which the resource property shall be set, already exists in the current resource instance model 8. If it is not yet defined, then the ASD Processor automatically creates a new resource instance (maybe by asking the ASD developer before) 9 and adds that resource instance to the current resource instance model 10. After that, the value of the resource property is finally set and reflected in the resource instance model 11.

The behavior of the ASD Processor as described makes up the core content of this invention: The concurrent modeling of workflow-like implemented operations and the underlying model in a very rich manner. This includes the evaluation of the semantics of certain activities and the evaluation of certain relationship stereotypes used within the model. This approach allows consistency checking for the resulting model on a type level and on an instance level.

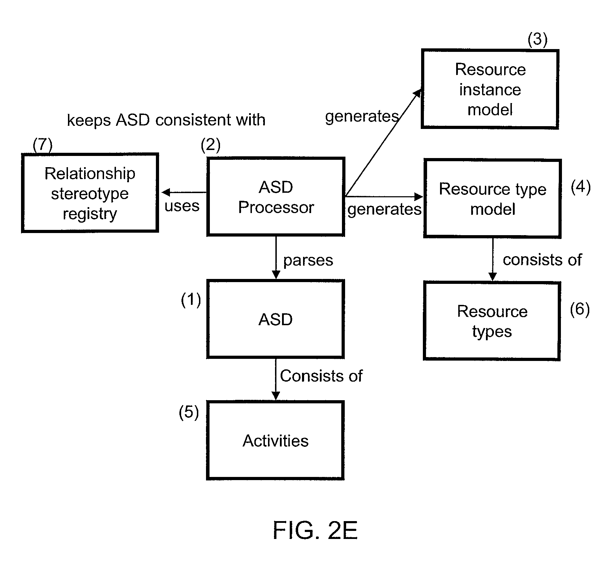

Fig. 2 E shows the basic architectural model for an implementation of the present invention.
The central component of this architecture is the ASD Processor 2. The ASD Processor 2 contains the actual logic implementing the behavior described to Fig. 2 C. The ASD Processor 2 gets an ASD 1 as input. Each ASD 1 consists of a sequence of activities 3, whereas each activity represents a certain, well-defined semantics of an operation.
After each modification of the ASD 1(e.g. createinstance, deleteinstance etc. - see Fig. 2 B) the ASD Processor 2 parses the ASD 1 and generates two in-memory models as a result of the parsing process: A resource type model 4 and a resource instance model 3. The resource type model 4 represents the model of resource types 6, which are required for being able to successfully process the ASD 1 in a workflow engine respectively result from the processing of the ASD 1. The ASD Processor 2 builds up that model based on the relationships associated/de-associated between resource instances of certain resource types (every time a relationship of a certain relationship stereotype is associated between two resources of certain types, then this implies that there will be also a relationship of that stereotype between the regarding resource types in the resource type model). The relationships created by such a dynamic behavior are marked in a special way for being able to distinguish them from relationships which have been part of the resource type model. The resource type model 4 has two main purposes from an ASD developer perspective. After having processed or during processing an ASD 1 with the ASD Processor 2, the ASD developer can check the resource type model 4, if the resource type model resulting from the used ASD 1 also matches what he expected. The second main purpose of the resource type model is that its content can be used for forming the basis of the implementation of those resource types (since implementations are always on a type level, not on an instance level). Furthermore, the ASD Processor creates properties for resource types if they are accessed or written by activities having a getResourceProperty/setResourceProperty semantic. In addition, the business logic operations called on resource types are also reflected in the resource type model.
The resource instance model 3 represents the model of resource instances, which would be created as the result of a successful processing of the ASD 1 in a workflow engine. For building up the resource instance model the ASD Processor 2 evaluates the semantics of the creation and the destruction of resource instances and the association / de-association of relationships. Besides that, the getResourceProperty and setResourceProperty operation calls are used for inserting the right values for the resource properties of the resource instances.

During the parse/generate process the ASD Processor 2 also leverages the information provided by a relationship stereotype registry 7. The relationship stereotype registry 7 contains descriptions for the semantics of various relationship stereotypes (such as "hosts", "dependsOn" ...). Each of those descriptions defines the special characteristics of a relationship stereotype, e.g. the characteristic of the hosts relationship stereotype is that if the MR playing the hoster role is destroyed, then the hostee is also destroyed and that a hostee may only have one direct hoster (e.g. an application hosted by an operation system can only be hosted by one operation system, and not by many). As already described above, a hosts relationship normally also implies a lifetime dependency, so that the hostee will also die if the hostee dies. The relationship stereotype registry 7 is populated by the ASD developer, i.e. the ASD developer registers some either predefined or self-written relationship stereotype definitions to the relationship stereotype registry. The relationship stereotype registry 7 with its contained relationship stereotype definitions forms a very important part of this invention. They allow working with dynamically created relationships based on real world semantics. So the ASD Processor 2 reads the semantics of those relationship stereotypes for being able to interpret the ASD correctly and extract as much as possible semantics out of it. The information about the relationship stereotypes is used for the generation of both the resource instance model and the resource type model.

During the development process of the ASD 1, the resource type model is constantly compared with the resource type model 4, whose content may be predefined by the ASD developer in advance. If there is no predefined resource type model available, then the ASD Processor 2 will offer the option of using the current in-memory resource type model resulting from the ASD 1 as the initial content for the resource type model. If the content of the resource type model is not consistent with the resource type model based on the ASD 1, then the ASD Processor 2 signals this to the ASD developer and offers the option of either bringing the resource type model in synchronization with what is resulting from the ASD 1 or changing the ASD activity to fit to the resource type model.

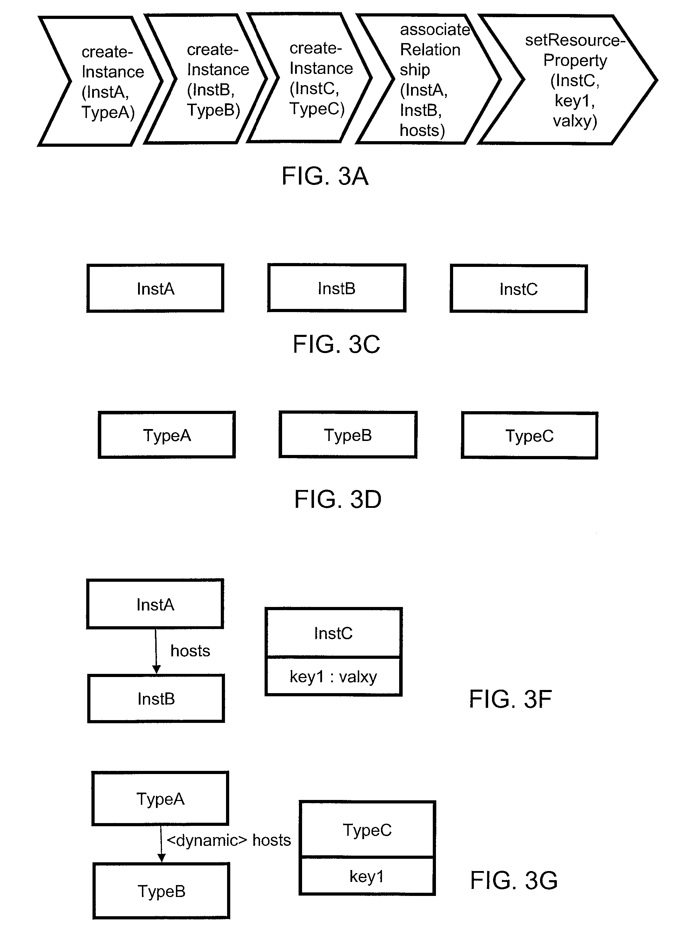

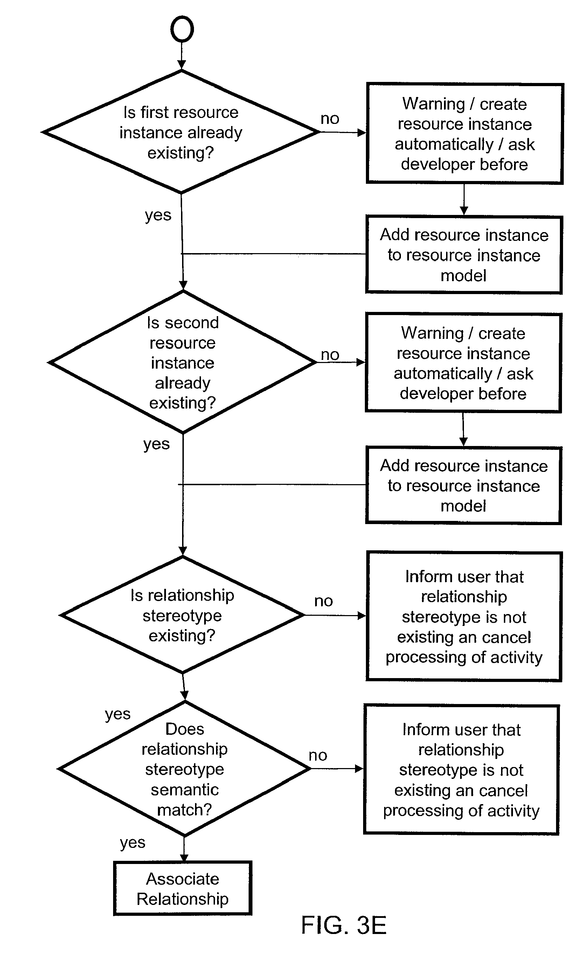

Fig. 3 A-E shows an example of an ASD for demonstrating how the ASD Processor processes such an ASD according to the present invention.

It is assumed that there is one relationship stereotype registry: The hosts relationship stereotype constrained in a way that it may only exist between resources of type A and type B. During the development process of the ASD of Fig. 3 A the ASD Processor constantly checks the consistency of the ASD by creating in-memory representations of the resulting resource type model and the resulting resource instance model. The ASD Processor also allows the ASD developer to switch between the "normal" ASD editing perspective and the perspective for seeing the current resource type model /resource instance model. This allows the ASD developer to check if those models match what he expected or to debug the ASD.

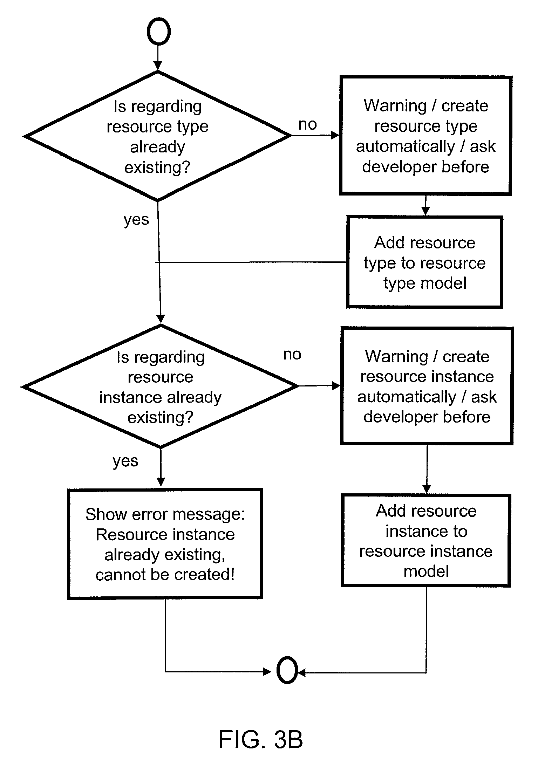

Fig. 3 A shows an ASD which consists of five activities. The first activity wants to create an instance of Type A. Fig. 3 B shows how that conceptually works.

The first check the ASD Processor performs is if the resource type of the instance to be created already exists. If that check evaluates to "false", then the ASD developer is asked if this resource type (in the current case: resource type TypeA) shall be created and added to the in-memory resource type model. After that, the ASDP checks if the resource instance identified by the resource handle InstA is already existing. If it already exists, then an error message signals the ASD developer that the resource instance referenced by resource handle InstA already exists and that it cannot be created a second time. Since this example started on the green field, there was no resource type and no resource instance existing, so the resource instance creation process for resource instance InstA successfully completes.

The next activity creates another resource instance - InstB. This process of creation completes successfully, analogous to the creation process of resource instance InstA as described in the preceding paragraph. Also the third activity (which creates the resource instance referenced by resource handle InstC) successfully completes. After having completed processing the first three activities, the resource instance model looks like Fig. 3 B and the resource type model looks like Fig. 3 D.

The fourth activity associates a relationship of the relationship stereotype "hosts" between resource instance InstA and resource instance InstB. The sequence of steps this activity internally performs is depicted in Fig. E. The first two checks the existence of the two resource instances is checked. If they are missing, the ASDP offers to automatically add them to the resource instance model. Since InstA and InstB are existing in the current example, the flow continues directly. After that it is checked, if the relationship stereotype to be used for the relationship exists in the relationship stereotype registry. If the relationship stereotype does not exist, then an error occurred. This is signaled to the ASD Developer and the ASDP stops processing the ASD. If the relationship stereotype exists, then the semantic of the relationship stereotype is read and checked if the current resource model matches its requirements, and if that also completed successfully, then the relationship is associated. Since the hosts relationship doesn't have any special requirements in this example, the relationship between InstA and InstB is created.

The fifth activity the ASD depicted in Fig. 3 A wants to set the resource property key1 of resource instance InstC to the value valxy. The internal flow of activities for the setResourceProperty operation is similar to the internal flow of the getResourceProperty operation shown in Figure 2 D.

The result of the complete processing of the example ASD is shown in Fig. 3 F and Fig. 3 G. They portrait the final resource instance model / resource type model.

## Claims

1. Method for dynamically modeling of a workflow for interacting stateful resources, wherein said workflow is described by an Activity Sequence Description (ADS), wherein said Activity Sequence Description consists of a sequence of activities,
wherein each activity describes an interaction with at least one stateful resource, comprising the steps:
modeling an activity by using a keyword identifying a type of interaction with at least one stateful resource, its parameters, and its semantics, wherein each described activity is concurrently provided as input to an Activity Sequence Description Processor (ADS Processor 1) during its modeling which performs the following steps:
identifying said keyword of said described activity,
updating the current resource type model and the current resource instance model based on the semantics of said currently processed keyword and the semantics of the relationship stereotype definition,
wherein said current resource type model and said current resource instance model are predefined models provided by the user or resulting from the current ASD modeling process,
wherein the successful updating of said resource type model and said resource instance model automatically indicates the consistency of said described activity to preceding modeled sequence of activities of an ASD ,
in the case of inconsistency, automatically providing support to the user for resolving said inconsistency.

2. Method according to claim 1, wherein said identifying step performs access to said current resource type model, a current resource instance model, a relationship stereotype definition and said semantics which are associated to said keyword.

3. Method according to claim 1, wherein said relationship stereotype definition is used for updating of said resource type model as well said resource instance model.

4. Method according to claim 1, wherein said updated resource type model and said updated resource instance model are visualized to the user for comparing the expected resource type model and resource instance model with the updated result.

5. Method according to claim 1, wherein said resource type model is used for generating resource type implementation code.

6. Method according to claim 1, wherein said keywords are createInstance, deleteInstance, associateRelationship, deassociateRelationship, getRecourceProperty, setResourceProperty, callOperation.

7. Method according to claim 1, wherein said relationship stereotype definition defines a lifetime dependency between interacting stateful resources.

8. System for dynamically modeling of workflow for interacting stateful resources, wherein said workflow is described by an Activity Sequence Description (ASD), wherein said Activity Sequence Description consists of a sequence of activities,
wherein each activity describes an interaction with at least one stateful resource, said system comprising:
means for modeling an activity by using a keyword identifying a type of interaction with at least one stateful resource, its parameters, and its semantics, wherein each described activity is concurrently provided as input to an Activity Sequence Description Processor (ASD Processor 1) during its modeling which performs the following steps:
means for identifying said keyword of said described activity,
means for updating the current resource type model and the current resource instance model based on the semantics of said currently processed keyword and the semantics of the relationship stereotype definition,
wherein said current resource type model and said current resource instance model are predefined models provided by the user or resulting from the current ASD modeling process,
wherein the successful updating of said resource type model and said resource instance model automatically indicates the consistency of said described activity to preceding modeled sequence of activities of the modeled ASD, and
in the case of inconsistency, means for automatically providing support to the user for resolving said inconsistency.

9. A computer program product stored on a computer usable medium comprising computer readable program means for causing the computer to perform the method of anyone of the claims 1 - 7, when said computer program product is executed on computer.
